# EUROPÄISCHE PATENTSCHRIFT

(11) **EP 0 728 106 B1**
(45) Veröffentlichungstag und Bekanntmachung des Hinweises auf die Patenterteilung: **07.05.1997**
(21) Anmeldenummer: 95900002.7
(22) Anmeldetag: 17.11.1994
(51) Int. Cl.: B65D 25/00

(54) **TRANSPORT- UND LAGERBEHÄLTER**
TRANSPORT AND STORAGE CONTAINER
CONTENEUR DE TRANSPORT ET DE STOCKAGE

(30) Priorität: 19.11.1993 AT 2341/93
(43) Veröffentlichungstag der Anmeldung: 28.08.1996
(73) Patentinhaber: STEINER FREIZEITMÖBEL GESELLSCHAFT M.B.H. & Co. KG., A-4812 Pinsdorf/Aurachkirchen (AT)
(72) Erfinder: PÖLZL, Franz, A-4614 Marchtrenk (AT)
(74) Vertreter: Secklehner, Günter, Dr.
(86) Internationale Anmeldenummer: AT9400172
(87) Internationale Veröffentlichungsnummer: WO9513970

(56) Entgegenhaltungen:
- DE-A- 2 909 136
- DE-A- 4 311 142
- DE-A- 4 342 916

## Beschreibung

Die Erfindung betrifft einen Transport- und Lagerbehälter aus Kunststoff.

Ein derartiger Behälter ist bereits aus CH-A-537 842 bekannt, bei der ein Zugang zum Behälter mittels einteiligem Schieber nur möglich ist, wenn dieser nach oben vertikal ganz oder teilweise angehoben wird. Ein Zugang durch die seitliche Öffnung im übereinander gestapelten Zustand der Behälter ist dann nicht möglich.

Weiters ist aus DE-A-29 09 136 ein Transport- und Lagerbehälter mit aufklappbarer Teilseitenwand bekannt, bei der Seitenzapfen über Einführöffnungen von einer äußeren Fläche her in Aufnahmeschlitze eingeführt werden können, die mit zu den Seitenzapfen korrespondierenden Abständen in Seitenholmen der zu verschließenden Teilseitenwand angeordnet sind. Eine Verschiebung in der Ebene der Seitenwand bedingt dann eine Verriegelung der Zapfen in den Aufnahmeschlitzen, so daß die Teilseitenwand in dieser Ebene gehalten ist. Die Klappe selbst ist jedoch mindestens zweiteilig, wobei diese zwei Teile gelenkig verbunden sind. Die gelenkige Verbindung sowie die Verriegelungsmechanismen stellen im Hinblick auf die Herstellung eine aufwendige Konstruktion dar.

Der Erfindung liegt die Aufgabe zugrunde, die Konstruktion der Öffnungsklappe in der Art auszubilden, daß die Klappe selbst aus einem einzigen Stück besteht und auf einfache Weise ein- und ausgebaut werden kann und die Klappe auch im gestapelten Zustand der Behälter betätigt werden kann und der gesamte Behälter, die Klappe, das Verbindungssystem zwischen Behälter und Klappe sowie der Dreh- und Verriegelungsmechanismus aus einem einzigen Material hergestellt sind sowie alle Seitenwände inklusive der darin befindlichen Klappen in die Ebene der Bodenplatte geklappt werden können.

Diese Aufgabe der Erfindung wird durch die im Kennzeichenteil des Patentanspruches 1 wiedergegebenen Merkmale erreicht. Der überraschende Vorteil liegt nunmehr darin, daß die Öffnungsfunktion auch in übereinander gestapelter Lagerung der Behälter erhalten bleibt und die Klappe selbst aus einem einzigen Stück besteht, also keine falttürartige, aufwendige Konstruktion aufweist.

Vorteilhaft ist aber auch, daß aufwendig geformte Gelenkachsen. die im Hinblick auf die Herstellung eine aufwendige Konstruktion darstellen, entfallen und trotzdem die Drehöffnungsfunktion erhalten bleibt.

Zum besseren verständnis der Erfindung wird diese anhand der in den Zeichnungen dargestellten Ausführungsbeispielen näher erläutert.

Es zeigen:
- Fig. 1: einen erfindungsgemäßen Transport- und Lagerbehälter in Draufsicht;
- Fig. 2: den Transport- und Lagerbehälter, geschnitten gemäß den Linien II - II in Fig. 1 bei entfernter Klappe;
- Fig. 3: den Transport- und Lagerbehälter in Ansicht gemäß Pfeil III in Fig. 1;
- Fig. 4: eine Klappe des erfindungsgemäßen Transport- und Lagerbehälters in Stirnansicht;
- Fig. 5: einen Verschlußzapfen der Klappe in Ansicht;
- Fig. 6: den Verschlußzapfen der Klappe, geschnitten gemäß den Linien XI - XI in Fig. 5;
- Fig. 7: eine Aufnahme und einen Lagerzapfen der Klappe, geschnitten gemäß den Linien XII - XII in Fig. 3.

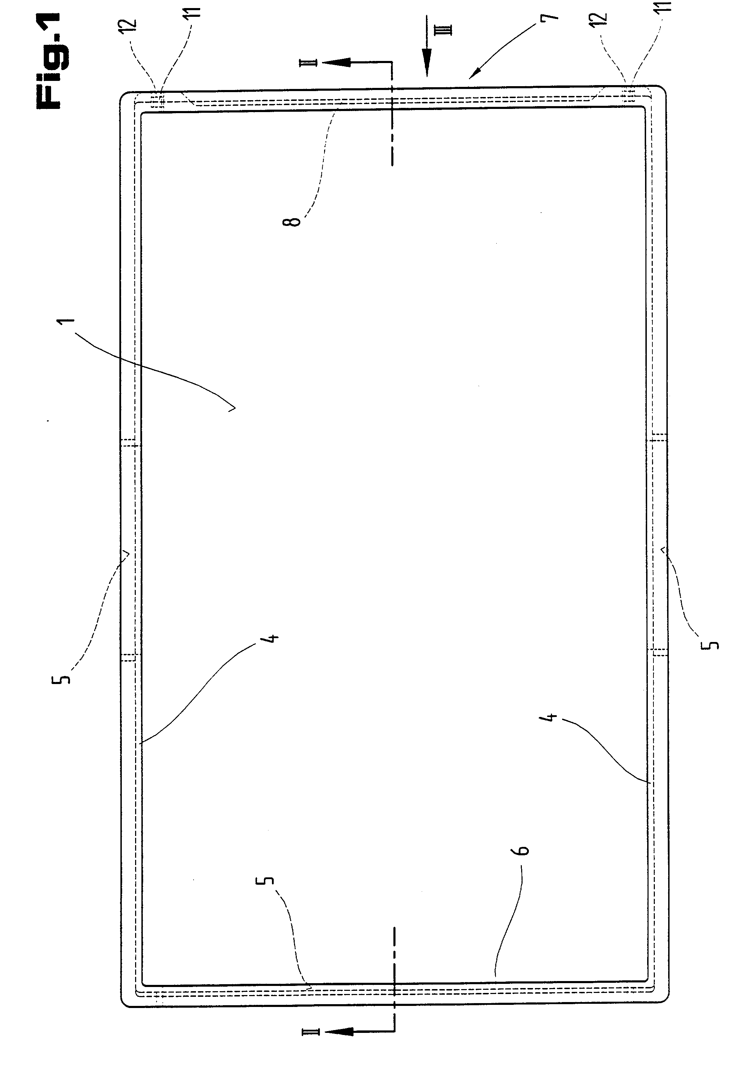

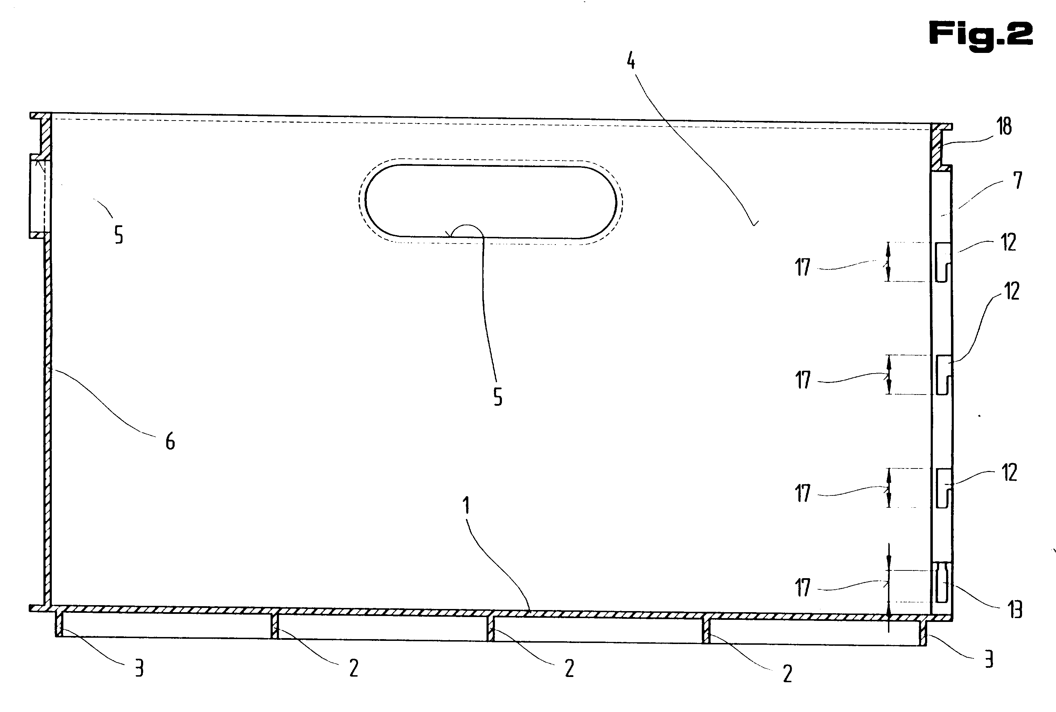

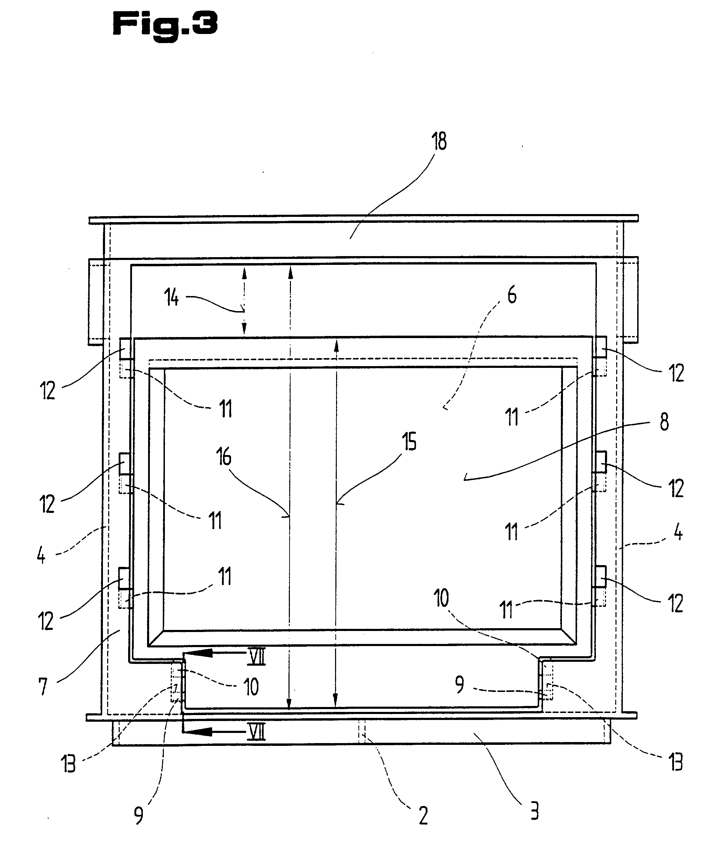

In den Fig. 1 bis 7 ist ein Transport- und Lagerbehälter aus Kunststoff zur Aufnahme von Stückgut mit rechteckigem Boden 1 und vier Wänden gezeigt. Der Boden 1 ist vollflächig oder gitterförmig und weist an der Unterseite Versteifungsrippen 2 auf, deren Randabschluß 3 gegenüber den Außenabmessungen zurückversetzt ist, sodaß im Fall der Stapelung der Kisten dieser in die oben offene Kiste versenkt werden kann und ein seitliches Wegrutschen verhindert. Die beiden Seitenwände 4 sind vollflächig geschlossen oder gitterförmig und weisen ovale Grifföffnungen 5 auf. Eine Stirnwand 6 ist ebenfalls vollflächig geschlossen oder gitterförmig und weist ebenfalls die Grifföffnung 5 auf. Mindestens eine der vier Wände, z.B. eine weitere Stirnwand 7, weist eine Klappe 8 auf. Diese kann auf einfache Weise vollständig umgeklappt werden, sodaß im geöffneten Zustand ein seitlicher Zugang zum Behälter ermöglicht wird und im geschlossenen Zustand diese mit dem festen Seitenwandteil fluchtet.

Die klappentragende Stirnwand 7, in der sich eine Klappenöffnung befindet, besteht aus einem an sich bekannten geschlossenen Rahmen. Das Lichtraumprofil des Rahmens ist rechteckig mit einspringenden Ecken im Bereich von Lagerzapfen 9.

Die Klappe 8 selbst besitzt seitlich Lagerzapfen 9 und Verschlußzapfen 10, 11, die in Aufnahmeschlitze 12, 13 der benachbarten vertikalen Schenkel des Rahmens eingreifen.

Die untersten Verschlußzapfen 10 und die Lagerzapfen 9 greifen in die Aufnahmeschlitze 13, z.B. vertikale Schlitze, höhenverstellbar ein. Die übrigen Verschlußzapfen 11 greifen in L-förmig nach außen führende Aufnahmeschlitze 12 ein. Um das vertikale Anheben für die anschließende Dreh-Öffnungsbewegung zu ermöglichen, ist eine Höhendifferenz 14 zwischen einer Klappenhöhe 15 und einer lichten Höhe 16 der Klappenöffnung größer als oder gleich wie eine Schlitzlänge 17 der Aufnahmeschlitze 12, 13. Ein auch bei geschlossener Klappe verbleibender Spalt in der Außenwand des Behälters dient einerseits dazu, um das vertikale Anheben der Klappe in seiner Ebene zu ermöglichen, um anschließend die Drehöffnung zu ermöglichen, andererseits eine Grifföffnung zu bilden. Ein horizontal darüberliegender Querbalken 18 des Rahmens erfüllt somit gleichzeitig die Funktion eines Tragegriffes.

Die Lagerzapfen 9 sind zylinderförmig mit Abflachungen 19 normal zur Klappenebene ausgebildet und bilden eine Drehachse. Der unterste, vertikale Aufnahmeschlitz 13 ist oben offen, besitzt jedoch an der oberen Mündung eine Verengung, die einen Durchtrittsspalt 21 ausbildet. Der untere Teil des Aufnahmeschlitzes 13 hat eine Breite, die geringfügig größer ist als ein Durchmesser des zylinderförmigen Lagerzapfens 9. Damit ist eine vertikale Bewegungsmöglichkeit gegeben. Die Verengung bzw. der Durchtrittsspalt 21 hat eine lichte Breite, die kleiner ist als der Durchmesser des Lagerzapfens 9, jedoch gleich wie die Dicke des Lagerzapfens 9, gemessen im rechten Winkel zu seinen Abflachungen 19. Somit wird erreicht, daß beim vertikalen Anheben eine leichte Höhenverstellung im breiten Bereich bis zur Verengung 20 des Aufnahmeschlitzes 13 möglich ist und ein gänzliches vertikales Herausziehen verhindert wird.

Wird die Klappe 8 nach dem Entriegelungsanheben in die horizontale Ebene gedreht und dann nochmals angehoben, ist nur der abgeflachte (kleinere) Durchmesser des Lagerzapfens 9 wirksam und kann durch die Verengung 20 des Aufnahmeschlitzes 13 mit geringem Kraftaufwand durchgeführt werden. Somit kann die Klappe 8 vom Rahmen bzw. Behälter getrennt werden oder im umgekehrten Ablauf eingesetzt werden.

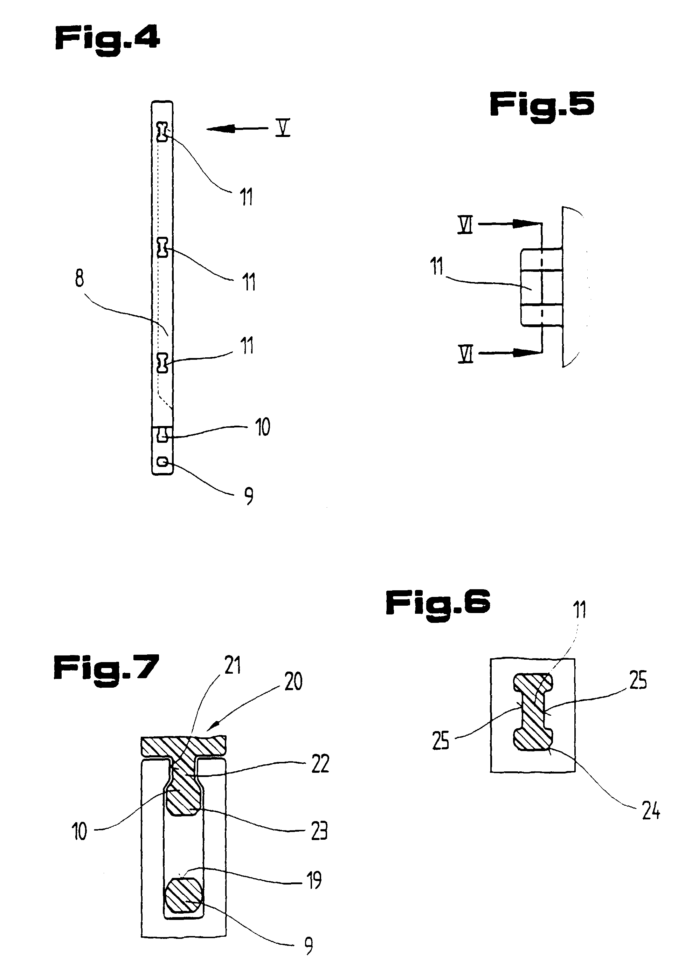

Unmittelbar oberhalb des unteren Lagerzapfens 9, der die Drehachse bildet, ist auf jeder Seite jeweils ein weiterer Verschlußzapfen 10 an der Klappe 8 angebracht, der eine Verriegelungsfunktion hat. Er besitzt eine prismatische Form. der Querschnitt besteht aus einem schmäleren Steg 22 und einem dickeren Kopf 23 (Siehe Fig. 7). Die Form entspricht mit geringfügig verkleinerten Abmessungen, der oberen Hälfte des untersten Aufnahmeschlitzes 13 und der verengten Mündung. Die Gleichartigkeit dieser Formen ermöglicht beim vertikalen Absenken der Klappe 8 ein Einrasten ("Einschnappen") und somit eine Verriegelung der Klappe 8 im geschlossenen Zustand.

Die weiteren Verschlußzapfen 11 der Klappe 8 haben, wie insbesondere den Fig. 5 und 6 zu entnehmen, eine prismatische Form, die Querschnittfläche ist im Umriß ein Rechteck mit abgerundeten Ecken 24, wobei die unteren Ecken stärker abgerundet sind, um ein leichteres Einführen in den vertikalen Bereich der L-förmigen Aufnahmeschlitze 12 zu ermöglichen. Im Mittelbereich 25 ist der Verschlußzapfen 11 beidseitig nocken-förmig verengt. Der horizontale Teil des L-förmigen Aufnahmeschlitzes 12 weist eine geringfügig größere Abmessung auf, als die zugehörige Höhe des Verschlußzapfens 11, somit ist ein leichtes horizontales Einführen und anschließendes Drehen der Klappe 8 in die Seitenwandebene möglich. Der vertikale Teil der L-förmigen Aufnahmeschlitz 12 weist die gleiche Abmessung wie die Schmalseite des Verschlußzapfens 11 auf. Damit ist die vertikale Bewegung mit geringem Kraftaufwand möglich und stellt dadurch eine "toleranzfreie" Führung in den Schlitzen dar und somit eine stabile (und nicht wackelige) Verbindung mit dem Seitenwandrahmen. Mit der nockenförmigen Verengung wird erreicht, daß der Verschlußzapfen 11 an vier Punkten in dem Aufnahme- schlitz 12 anliegt. Durch die Elastizität des Materials lassen sich durch die kleinen Auflageflächen relativ große Druckspannungen bei geringem Kraftaufwand erzielen, womit bei leichtgängiger Handhabung eine exakte Führung und eine sichere Fixierung der Klappe 8 in der geschlossenen Lage erzielt werden kann. Die in der beschriebenen Art bzw. in den Abbildungen dargestellte Klappe 8 kann natürlich auch in mehreren Seitenwänden ausgebildet werden. Weiters ist ersichtlich, daß der gesamte Behälter in seiner beschriebenen Art aus einem einzigen Material herstellbar ist. Dies wird dadurch erreicht, daß die Klappe 8 mit seinen Verschluß- und Lagerzapfen 10, 11, 9 mittels Druckgußform in einem Stück in an sich bekanntem Verfahren herstellbar ist. Das gleiche gilt für den Behälter selbst. Diese Sortenreinheit ermöglicht im Falle, daß der Behälter nicht mehr funktionstüchtig ist, eine problemlose Recyclingfähigkeit.

Die Konstruktion, die es ermöglicht, alle vier Seitenwände in die Ebene der Bodenplatte zu klappen und als Leergut mit einem wesentlich geringeren Platzbedarf auskommt. ist an sich als bekannt vorausgesetzt und wird hier nicht weiter beschrieben.

Die Kombination aus den in die Bodenebene klappbaren Seitenwände und die in mindestens einer dieser Seitenwände befindliche Klappe ist durch die oben beschriebene Rahmenkonstruktion des die Klappe umgebenden Restwandteiles möglich.

## Patentansprüche

1. Transport- und Lagerbehälter mit Boden und Seitenwänden (4), von denen wenigstens eine Seitenwand (4) einen oben geschlossenen Rahmen zum Einsetzen einer abschwenkbaren Klappe (8) bildet, die über beidseits abstehende, koaxial zueinander angeordnete, untere Lagerzapfen (9) in Lageraugen der Rahmenseitenteile eingreift und über beidseits abstehende, oberhalb der Lagerzapfen (9) angeordnete Verschlußzapfen (10, 11) in über Einführöffnungen von einer äußeren Oberfläche zugänglichen Aufnahmeschlitzen (12, 13) der Rahmenseitenteile einhängbar ist, wobei eine lichte Höhe (16) des Rahmens der klappentragenden Seitenwand (4) bzw. Stirnwand (7) größer ist als die Klappenhöhe (15) und eine Schlitzlänge (17) der Aufnahmeschlitze (12, 13) in Höhenrichtung gleich der oder kleiner als die Höhendifferenz (14) zwischen Rahmen und Klappe (8) ist und zumindest einer der Aufnahmeschlitze (13) eine Verengung (20) als Raste für den zugehörenden Verschlußzapfen (10) aufweist und wobei die die Lageraugen für die Lagerzapfen (9) ausbildenden Aufnahmeschlitze (13) langschlitzförrnig ausgebildet sind.

2. Transport- und Lagerbehälter nach Anspruch 1, dadurch gekennzeichnet, daß der Langschlitz der Lageraugen aufwärts in einen schmäleren Durchtrittsspalt (21) ausmündet und die Lagerzapfen (9) eine an die Durchtrittsspaltweite angepaßte, zur Klappenebene winkelversetzte Abflachung (19) aufweisen.

3. Transport- und Lagerbehälter nach Anspruch 2, dadurch gekennzeichnet, daß der Langschlitz der Lageraugen zusätzlich als Aufnahmeschlitz (13) für den jeweils untersten Verschlußzapfen (10) vorgesehen ist, wobei der Durchtrittsspalt (21) die Raste dieser Verschlußzapfen (10) bildet.

4. Transport- und Lagerbehälter nach einem der Ansprüche 1 bis 3, dadurch gekennzeichnet, daß die einstückige Klappe (8), der Boden (1) und die Seitenwände (4) bzw. Stirnwände (6, 7) aus dem gleichen Kunststoff hergestellt sind.

5. Transport- und Lagerbehälter nach einem der Ansprüche 1 bis 4, dadurch gekennzeichnet, daß die klappentragende Stirnwand (7) zusammen mit den anderen Seitenwänden (4) bzw. Stirnwand (6) wie an sich bekannt, in die Bodenebene abklappbar am Boden (1) angelenkt ist.

## Claims

1. Transport and storage container with base and side walls (4), of which at least one side wall (4) forms a frame, which is closed at the top for inserting a flap (8) that can be pivoted off, which flap by means of lower bearing pins (9), projecting on both sides and arranged coaxially relative to one another, engages in bearing eyes of the frame side parts, and can be inserted by means of locking pins (10, 11), projecting on both sides and arranged above the bearing pins (9), into mounting slots (12, 13) of the frame side parts which are accessible via insertion openings from an outer surface, in which the inside height (16) of the frame of the flap-bearing side wall (4) or face wall (7) is greater than the flap height (15), and the slot length (17) of the mounting slots (12, 13) is equal to or smaller in height than the height difference (14) between the frame and flap (8), and at least one of the mounting slots (13) comprises a restriction (20) as a detent for the corresponding locking pins (10), and in which the mounting slots (13) forming the bearing eyes for the bearing pins (9) are designed in the form of longitudinal slots.

2. Transport and storage container according to Claim 1, characterised in that the longitudinal slot of the bearing eyes opens upwards into a narrower passage (21) and the bearing pins (9) have a flattened edge (19) angularly displaced relative to the flap plane that is adjusted to fit the passage width.

3. Transport and storage container according to Claim 2, characterised in that the longitudinal slot of the bearing eyes is provided in addition as a mounting slot (13) for the bottom locking pin (10), whereby the passage (21) forms the detent for this locking pin (10).

4. Transport and storage container according to one of Claims 1 to 3, characterised in that the one piece flap (8), the base (1), the side walls (4) and face walls (6, 7) are made of the same plastic.

5. Transport and storage container according to one of Claims 1 to 4, characterised in that flap-bearing face wall (7) together with the other side walls (4) and face wall (6) is hinged to the base (1) in a known manner able to pivot into the base plane.

## Revendications

1. Conteneur de transport et de stockage avec un fond et des parois latérales (4) dont au moins une paroi latérale (4) forme un cadre fermé en haut pour la mise en place d'un volet pivotant (8) qui s'engage par des tourillons inférieurs (9) faisant saillie des deux côtés, disposés coaxialement l'un à l'autre dans des oeillets de palier des parties latérales de cadre et qui peut être accroché par des pivots de fermeture (10, 11) faisant saillie des deux côtés, disposés au-dessus des tourillons (9) dans des fentes de réception (12, 13) des parties latérales de cadre accessibles par des ouvertures d'insertion depuis une surface extérieure, et dans lequel une hauteur libre (16) du cadre de la paroi latérale (4) supportant le volet et, respectivement de la paroi frontale (7) est plus grande que la hauteur de volet (15), et une longueur de fente (17) des fentes de réception (12, 13) dans la direction en hauteur est identique ou plus petite que la différence en hauteur (14) entre le cadre et le volet (8), et au moins une des fentes de réception (13) présente un rétrécissement (20) comme organe d'enclenchement pour le pivot de verrouillage associé (10), et où les fentes de réception (13) constituant les oeillets de paliers pour les tourillons (9) sont réalisées en forme de fente oblongue.

2. Conteneur de transport et de stockage selon la revendication 1, caractérisé en ce que la fente oblongue des oeillets de palier débouche vers le haut dans une fente de passage plus étroite (21), et que les tourillons (9) présentent un plat (19) adapté à la largeur de la fente de passage, décalé angulairement relativement au plan du volet.

3. Conteneur de transport et de stockage selon la revendication 2, caractérisé en ce que la fente oblongue des oeillets de palier est prévue de plus comme fente de réception (13) pour respectivement le pivot de fermeture (10) le plus inférieur, la fente de passage (21) constituant l'organe d'enclenchement de ces pivots de fermeture (10).

4. Conteneur de transport et de stockage selon l'une des revendications 1 à 3, caractérisé en ce que le volet (8) en une pièce, le fond (1) et les parois latérales (4) et, respectivement les parois frontales (6, 7) sont réalisées dans la même matière synthétique.

5. Conteneur de transport et de stockage selon l'une des revendications 1 à 4, caractérisé en ce que la paroi frontale (7) portant le volet est articulée conjointement avec les autres parois latérales (4) et, respectivement la paroi frontale (6), comme cela est connu, au fond (1) de façon pliable sur le plan du fond.
